(19) Europäisches Patentamt
European Patent Office
Office européen des brevets

(11) **EP 4 586 080 A1**

(12) **EUROPEAN PATENT APPLICATION**

(43) Date of publication:
**16.07.2025 Bulletin 2025/29**

(21) Application number: **24151798.6**

(22) Date of filing: **15.01.2024**

(51) International Patent Classification (IPC):
**G06F 9/30** *(2018.01)*    **G06F 9/38** *(2018.01)*

(52) Cooperative Patent Classification (CPC):
**G06F 9/3001; G06F 9/30014; G06F 9/30032; G06F 9/30036; G06F 9/30109; G06F 9/3887; G06F 17/14; G06F 17/142**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Huawei Technologies Co., Ltd.**
**Shenzhen, Guangdong 518129 (CN)**

(72) Inventors:
• **Qi, Jiawen**
  **80992 Munich (DE)**
• **Hua, Yanghao**
  **80992 Munich (DE)**
• **Wu, Xiaofeng**
  **80992 Munich (DE)**

(74) Representative: **Körber, Martin Hans et al**
**Mitscherlich PartmbB**
**Patent- und Rechtsanwälte**
**Karlstraße 7**
**80333 München (DE)**

Remarks:
Amended claims in accordance with Rule 137(2) EPC.

(54) **A PROCESSOR AND METHOD FOR SIGNAL PROCESSING USING FAST FOURIER TRANSFORMS**

(57)    Described is a processor (1602) for processing a signal using a fast Fourier transform, the processor (1602) being configured to: receive (1401) a signal comprising input data of N samples; and perform a Fourier transform operation on the input data of N samples by: taking the input data of N samples as initial input, forming (1402) an intermediate result by performing one or more Fourier transform stages using one or more Fourier transform operations of a first type; and taking the intermediate result as input, forming (1403) an output by performing one or more Fourier transform stages on the intermediate result using one or more Fourier transform operations of a second type. This may improve execution speed, data memory size and hardware scalability of FFT/iFFT computation using SIMD/vector processors.

**EP 4 586 080 A1**

*FIG. 6*

## Description

### FIELD OF THE INVENTION

This invention relates to the processing of signals using fast Fourier transforms for determining discrete Fourier transforms, for example for image processing or mobile telecommunication applications.

### BACKGROUND

A Fourier transform is a mathematical technique for converting a time function into one expressed in terms of frequency. A discrete Fourier transform (DFT) converts a finite sequence of equally-spaced samples of a function into a same-length sequence of equally-spaced samples of the discrete-time Fourier transform, which is a complex-valued function of frequency. A fast Fourier transform (FFT) is an algorithm that computes the discrete Fourier transform of a sequence, or its inverse.

The FFT algorithm serves at the core for modem digital communication systems, including but not limited to cellular (for example, 2G, 3G, 4G and 5G), short range (for example, Bluetooth, WiFi and NearLink), radar systems, optical communication and personal devices (for example, peripheral component interconnect express in personal computers and mobile phones).

Especially for battery-powered mobile devices, having an extremely high standard on performance, power consumption and area (PPA) requirements, the capability to efficiently compute FFTs up to 4K samples (for example, for 5G New Radio (NR)), and yet keep the programmability (versus fixed designs in application specific integrated circuits (ASICs)) to support multiple and evolving standards, as well as simultaneously supporting multiple product families for scalability, is a key competence on terminal devices such as mobile phones.

FFTs can be computed using a vector processor, which may be a Single Instruction Multiple Data (SIMD) processor. A vector processor is a central processing unit (CPU) that implements an instruction set where its instructions are designed to operate efficiently and effectively on large one-dimensional arrays of data called vectors. A SIMD/vector register is an additional register in a vector processor. Usually, a SIMD/vector register is an ordered collection of scalar values and provides intermediate space for the component of a vector to achieve fast access of the data in the vector.

Long or short FFTs are distinguished by whether all the points in the FFT can be contained in one SIMD/vector register. For example, if the input size of the FFT is 16, and one register can only contain 4 points, the FFT is considered to be a long FFT. If the register is able to contain 16 points, the FFT is considered to be a short FFT.

Vectorization is the process of transforming a scalar operation acting on individual data elements (Single Instruction Single Data) to an operation where a single instruction operates concurrently on multiple data elements (SIMD). Vectorization is an important technique to harness the data parallelism of an N-point DFT (comprising N data points) which is expressed as:

$$y_k = \sum_{n=0}^{N-1} x_n W_N^{kn}$$

where $W_N^{kn} = e^{-2\pi i \frac{kn}{N}}$.

Then, the vectorized N-point DFT is:

$$\vec{y} = DFT_N \vec{x}$$

where $\vec{y} = (y_0, y_1, \ldots, y_{N-1})^T$, $\vec{x} = (x_0, x_1, \ldots, x_{N-1})^T$ and $DFT_N = [W_N^{kn}]_{0 \le k, n < N}$.

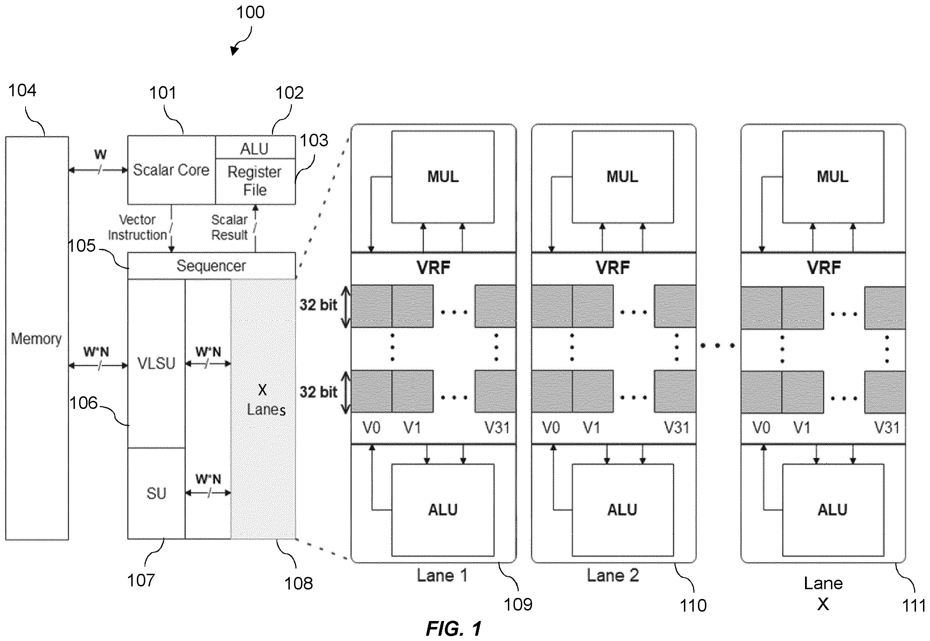

Figure 1 shows the general structure of a lane-based vector processor 100. The front end is a scalar processor responsible for fetching and decoding all instructions. The scalar processor comprises a scalar core 101, an arithmetic login unit (ALU) 102 and a register file 103. If there is a vector instruction, the scalar core 101 will dispatch it to the vector core and perform corresponding actions. The scalar core and the vector core are both in communication with memory 104.

The sequencer 105 of the vector core comprises a control unit. The Vector Load and Store Unit (VLSU) 106 and Slide Unit (SLDU) 107 are designed to access the memory and permute the elements in the vector registers respectively. The VLSU 106 loads/stores multiple data between memory and vector registers in parallel. The SLDU 107 performs the vector permutation (i.e. changes the order of data in a vector register).

The vector core comprises multiple lanes. A lane is a part of the SIMD/vector processor, which mainly contains a fraction of the SIMD/vector register file and the computational resources. In this example, the vector core has X lanes, show at 108. X is an integer. X is scalable, for example, X = 1, 2, 4, 8, ... Each lane can store multiple data from one vector register and all lanes can process data in parallel.

The basic components of the lanes in the traditional vector core is shown on the right in Figure 1, with lane 1 shown at 109, lane 2 shown at 110 and lane X at 111. In this example, each lane comprises execution units in the form of a multiplier (MUL) for performing complex number multiplication and an arithmetic logic unit (ALU) for performing simpler operations, such as addition, subtraction and shifting. In this example, the vector register file (VRF) comprises 32 bits, *V0-V32,* interleaved into the N lanes. In other implementations, there may be different or variable numbers of bits. It is important to note that the length of the vector register is longer than that of the register in the scalar core and is capable of storing elements with different width.

As mentioned above, the SIMD processor processes multiple data in parallel with a single instruction. The scalar core fetches and decodes scalar and vector instructions, and dispatches vector instructions to the vector core.

Hardware resource scalability is the main advantage of the lane-based vector processor, meaning that the number of lanes and the length of the vector register can be configured without modifying the overall architecture. Therefore, many Application Specific Instruction-set Processors (ASIPs) for FFT are designed based on the lane-based vector processor to support different types of products depending on the computation performance required.

Depending on whether the number of elements in the vector register is agnostic to the programmer during the run time, the vector processer can also be divided into two types: Fixed Length SIMD processor and the vector SIMD processor. The latter has the advantage of binary compatibility at the cost of some additional hardware complexities. One important feature of the vector SIMD/-vector processor is that SIMD/vector registers can be grouped into a longer register and treated as a single register.

The vectorized FFT algorithm can be executed either on the general-purpose SIMD/vector processor or on the ASIP. When running on the general-purpose processor, the vector shuffling in each FFT stage is done by general vector shuffling instructions. Current general-purpose SIMD/vector processors suffer from the low execution speed or large hardware overhead to deal with the vector shuffling in FFT that supports arbitrary shuffling patterns. On the other hand, prior ASIP implementations for FFT usually employs large amount of dedicated hardware resources to accelerate the inherent vector shuffling of different FFT algorithms. As a result, the hardware reusability by the other algorithms is very limited and additional hardware is needed to accelerate other algorithms, causing an increase of the cost.

There are various vectorized FFT algorithms, among which the Cooley-Tukey FFT (see https://en.wiki pedia.org/wiki/Cooley%E2%80%93Tukey_FFT_algo rithm) is the best-known algorithm. The Cooley-Tukey FFT algorithm has been used in many products and software libraries.

To achieve efficient FFT computation through data parallelism, it is desirable to not only have efficient software vectorization, but also hardware supporting processing data in parallel. Compared with the pure scalar implementation (e.g. FFT implemented using standard C/C++ code and/or embedded scalar instructions), the SIMD/vector implementation supports parallel data processing by introducing an additional SIMD/vector register file and execution units, enabling multiple data elements to be transferred and processed at the same time by a single instruction.

In terms of short FFT computation, prior approaches using the Cooley-Tukey FFT (for example, https://en.wikipedia.org/wiki/Cooley%E2%80%93Tu

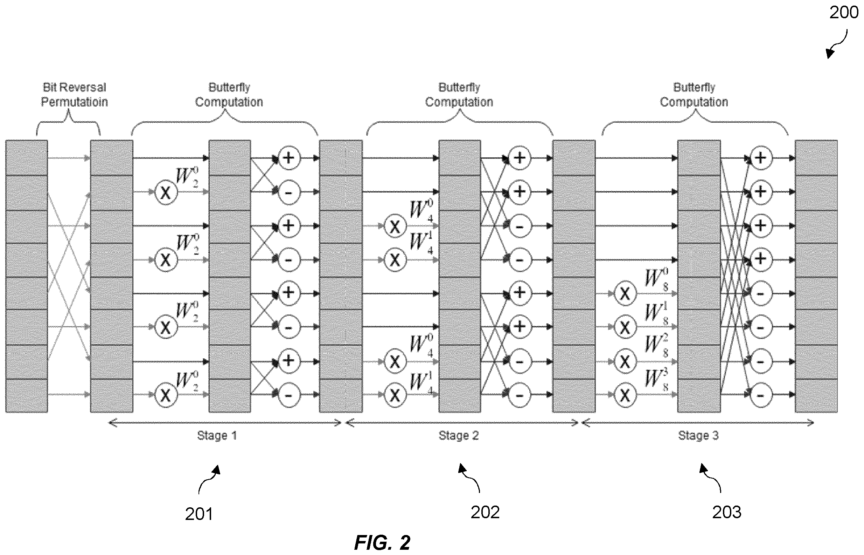

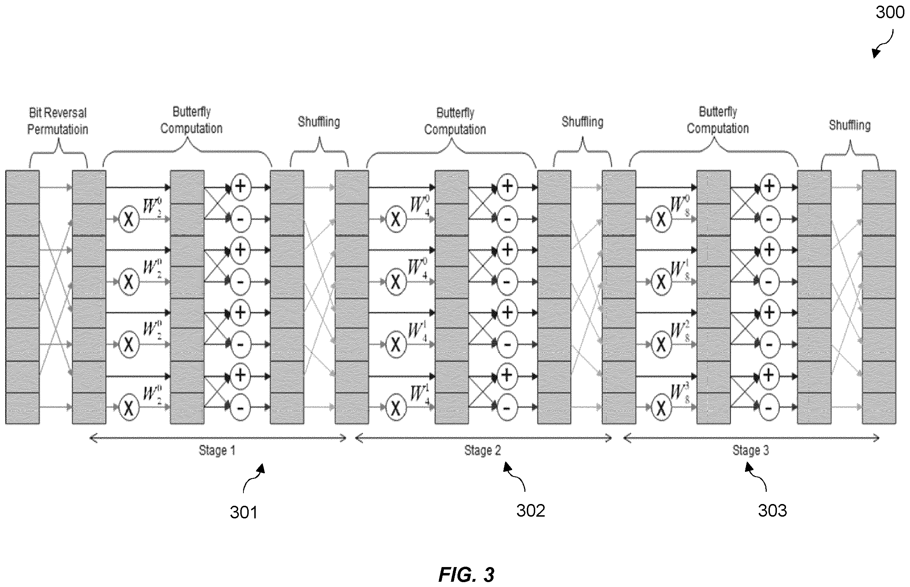

key_FFT_algorithm), a dataflow 200 for which is shown in Figure 2, generally require a more dedicated data path for vector shuffling than those using the Pease FFT (see, for example, https://link.springer.com/referenceworkentry/ 10.1007/978-0-387-09766-4_243), a dataflow 300 for which is shown in Figure 3. This is because the vector shuffling patterns in the Cooley-Tukey FFT are different in each stage. In Figures 2 and 3, three stages are shown at 201, 202, 203 and 301, 302, 303 respectively. These shuffling operations can act as a bottleneck for execution speed, data memory size and hardware scalability. Moreover, auxiliary instructions are needed to control the selection of a different data path, which may cause a degradation of performance.

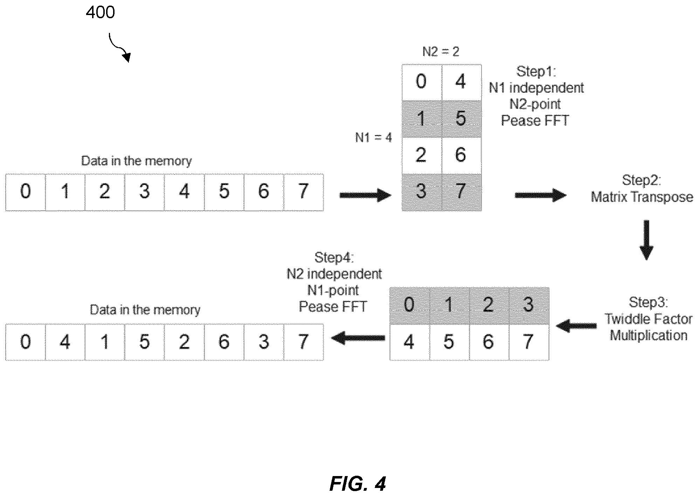

For long FFT computation, prior approaches apply 4-step FFT decomposition (see, for example https://en.wikipedia.org/wikiBailey%27s_FFT_algo rithm) to break an N-point long FFT into N1 and N2-point (where N = N1 *N2) short FFTs, which can be computed independently. An example of a dataflow 400 using the 4-step algorithm is shown in Figure 4. The vector length of the decomposed FFTs is usually shorter than the maximum vector length provided by the SIMD/vector processor. Therefore, it requires more vector instructions and may result in a degradation of the performance.

It is desirable to develop a method for FFT computation in vector processors that can overcome at least some of the above issues.

## SUMMARY OF THE INVENTION

According to one aspect, there is provided a processor for processing a signal using a fast Fourier transform, the processor being configured to: receive a signal comprising input data of N samples; and perform a Fourier transform operation on the input data of N samples by: taking the input data of N samples as initial input, forming an intermediate result by performing one or more Fourier transform stages using one or more Fourier transform operations of a first type; and taking the intermediate result as input, forming an output by performing one or more Fourier transform stages on the intermediate result using one or more Fourier transform operations of a second type.

This may improve execution speed, data memory size and hardware scalability of FFT/iFFT computation using SIMD/vector processors. The hybrid approach maps very well onto the SIMD/vector processor for achieving high resource utilization rate and allows a simplified data path design of the underlying processor micro-architecture.

The processor may cyclically perform the one or more Fourier transform stages using one or more Fourier transform operations of the first type. The processor may cyclically perform the one or more Fourier transform stages using one or more Fourier transform operations of the second type. The output of one stage may form the input for the subsequent stage. Multiple stages may be performed in sequence.

The step of forming the output by performing one or more Fourier transform stages using one or more Fourier transform operations of a second type may comprise forming the output by performing a single Fourier transform stage using one or more Fourier transform operations of a second type. In other implementations, there may be multiple stages using one or more Fourier transform operations of the second type. The number of stages depend on the input data size N. However, these one or more stages using operations of the second type may be completely performed within the processor, with no memory load/store instructions used until the final result (i.e. the output) of this one or more stages is ready.

The processor may be configured to implement the Fourier transform operations of the first type by executing a series of instructions that include, for each Fourier transform operation, a plurality of processing operations without data reordering (which may be inside the processor) therebetween. The processor may be configured to implement the Fourier transform operations of the second type by executing a series of instructions that include, for each Fourier transform operation, a plurality of processing operations with data reordering therebetween (which may be inside the processor). The plurality of processing operations may comprise a plurality of mathematical operations. The mathematical operations may comprise a plurality of one or more of multiplication, addition and subtraction operations. The mathematical operations may comprise one or more butterfly multiplication steps. Therefore, data reordering inside the processor (for example, bit-shuffling) may not be performed during the Fourier transform operations of the first type, and instead only needed when storing the result back to memory after intermediate result is ready (by using scatter store vector instruction). As bit-shuffling stages in algorithms such as Cooley-Tukey radix n FFT algorithms can act as a bottleneck for execution speed, data memory size and hardware scalability, this approach may improve these parameters.

The processor may be configured to decompose the input data of N samples into multiple smaller parts by performing the Fourier transform operations of the first type. The Fourier transform operations of the first type may decompose the input data of N samples into multiple smaller parts. The intermediate result may comprise the multiple smaller parts. The input may comprise a long FFT and the intermediate result may comprise multiple short FFTs. The multiple smaller parts may then be used as input for the one or more Fourier transform stages using one or more Fourier transform operations of the second type to form the output. For example, this may allow a long FFT to be decomposed into smaller FFTs that can be handled by the Pease FFT kernel.

The processor may be configured to implement the Fourier transform operations of the first type using a Cooley-Tukey radix n fast Fourier transform algorithm, where n is a power of 2. The Fourier transform operations of the first type may comprise Cooley-Tukey FFT algorithms with mixed radix. The use of a Cooley-Tukey radix n FFT algorithm for the first stages may allow a long FFT to be decomposed into multiple smaller parts (for example, into multiple small FFTs) that can then be processed using a different FFT algorithm in later stages.

The processor may be configured to implement the Fourier transform operations of the first type using a four-step or a six-step fast Fourier transform algorithm. The use of these algorithms may provide an alternative method for a long FFT to be decomposed into multiple smaller parts (for example, into multiple small FFTs) that can then be processed using a different FFT algorithm in later stages.

The processor may be configured to implement the Fourier transform operations of the second type using a Pease fast Fourier transform algorithm. This may allow a constant shuffling pattern to be used for each stage of the Pease FFT algorithm and a dedicated data path for vector shuffling.

Each processor may be a vector processor having at least some vector registers of length VLMAX. The processor may be configured to execute instructions. At least some of the instructions executed by the processor may take vectors of length VLMAX as operands. The one or more stages using the Fourier transform operations of the second type may take vectors of length VLMAX as operands. This may allow a long FTT to be decomposed into multiple shorter FTTs that can be processed separately.

The processor may be configured to perform the Fourier transform operation by performing K stages of the Fourier transform operation of the first type and M stages of the Fourier transform operation of the second type. K and M may be integers greater than 1. The total number of FFT computation stages L (log2(N)) is equal to K + M, i.e. L = K + M.

Where N is greater than VLMAX, this input may be referred to as a long FFT. Where N is less than or equal to VLMAX, this input may be referred to as a short FFT. The present approach may allow a long FFT to be decomposed into multiple short FFTs. The one or more Fourier transform stages using one or more Fourier transform operations of a second type may take vector of length VLMAX as operands. This may allow the processing apparatus to process long FFTs by breaking them down into multiple short FFTs that can then be processed separately to form the output.

The Fourier transform operations of the second type may comprise a data-shuffling operation. The data-shuffling operation may be implemented by executing one or two instructions. This may be used to reorder the data between at least some of the plurality of processing operations (for example, multiplication and addition and/or subtraction mathematical operations) of the Fourier transform operations of the second type. The Fourier transform operations of the second type may comprise performing the plurality of processing operations (for example, multiplication and addition/subtraction, for example as part of butterfly computation) and performing the shuffling operation. The one or more stages comprising Fourier transform operations of the first type may not comprise a data-shuffling operation.

In one implementation, the processor may be configured to perform the Fourier transform operations of the second type by implementing a data-shuffling operation implemented by two instructions. A first instruction of the two instructions may be operable to shuffle data stored in two source registers into an intermediate register. The intermediate register may have twice the length of each of the source registers. The shuffling operation may be a perfect shuffling operation. The shuffling operation may be identical for each of the stages using one or more Fourier transform operations of a second type.

A second instruction of the two instructions may be operable to slide each half of the data stored in the intermediate register to a respective destination register to generate two operands for subsequent arithmetic operations. There may be two destination registers. Each destination register may receive half of the data from the intermediate register when the sliding instruction is executed. A first destination register may receive data from a first half of the intermediate register. A second destination register may receive data from a second half of the intermediate register. This may allow the shuffling operation and the butterfly operation in the Pease FFT to be decoupled. This can result in better hardware scalability than using an FFT coprocessor. The number of execution units and the length of the vector registers can be changed freely without affecting the data path of the shuffling and the execution units. This can also allow for better reusability for other algorithms. The application specific instruction and data path for the shuffling operation have the potential to be used by other communication algorithms, such as algorithms for bitonic sorting.

In some implementations, the data-shuffling operation may be implemented in a single instruction (i.e. one instruction for shuffling and sliding). In this case, advantageously, the data path is not changed. This may allow the method to be implemented using fewer instructions, which may be more computationally efficient.

The processor may be configured to implement the data-shuffling operation by: setting a length of the intermediate register to be C; reading the data stored in the two source registers; shuffling the data stored in the two source registers into the intermediate register through a fixed data path; setting a length of the respective destination registers to be C/2; reading the data stored in the intermediate register; and writing the data stored in the intermediate register to the respective destination registers. This combination of a perfect shuffling and a simple per SIMD/vector processor parameterized power of two sliding operation are SIMD/vector micro-architecture implementation friendly. C is an integer greater than 1.

The intermediate result may be stored in one or more indexed data storage areas or an indexed memory. An indexed vector store is part of the vector processor instruction-set architecture (ISA) that can accelerate the storage of multiple data into predefined scattered locations. This may allow the intermediate result to be conveniently written and read to storage.

The intermediate result may be stored in a special purpose or dedicated register by implementing an indexed save operation, wherein the special purpose or dedicated register is of length N. This may result in less access to memory. Memory access can result in high power and bandwidth consumption, which can be a bottleneck of performance. Therefore, the storage of the intermediate result at a special purpose or dedicated register may reduce power and bandwidth consumption.

The load and store address of the N data points may be identical within each stage of the one or more Fourier transform stages using Fourier transform operations of the first type. The processing apparatus may be configured to reconstruct the input data using vector scatter/gather store instructions. This may be performed using either pre-computed bit-reversal index stored in memory, or an on-the-fly computed bit-reversal index. This may be used to form the output. The output may have N samples. The use of a pre-stored address index has the benefit of requiring less computation. The use of an on-the-fly computed address index has the benefit of requiring less memory.

The processor may be further configured to store the output at a memory of the apparatus. The processor may be further configured to transmit or transfer or save the output to a digital communications device and/or an image processing device.

The processor may be a vector/SIMD processor.

According to a further aspect, there is provided a method for processing a signal using a fast Fourier transform, the method comprising: receiving a signal comprising input data of N samples; and performing a Fourier transform operation on the input data of N samples by: taking the input data of N samples as initial input, forming an intermediate result by performing one or more Fourier transform stages using one or more Fourier transform operations of a first type; and taking the intermediate result as input, forming an output by performing one or more Fourier transform stages on the intermediate result using one or more Fourier transform operations of a second type.

This method may improve execution speed, data memory size and hardware scalability of FFT/iFFT computation using SIMD/vector processors. The hybrid method maps very well onto the SIMD/vector processor for achieving high resource utilization rate and allows a simplified data path design of the underlying processor micro-architecture.

The processor may be further configured to store the output at a memory of an apparatus comprising the processor. The processor may be further configured to transmit or transfer or save the output to a digital communications device and/or an image processing device. The method may further comprise storing the output at a memory of an apparatus. The method may further comprise transmitting or transferring or saving the output to a digital communications device and/or an image processing device. This may allow the output to be used in a technical process at the device.

According to another aspect, there is provided a computer program which, when executed by a computing device, causes the computing device to perform the method described above.

According to a further aspect, there is provided a data carrier storing in non-transient form the computer program described above.

BRIEF DESCRIPTION OF THE FIGURES

The present invention will now be described by way of example with reference to the accompanying drawings.

In the drawings:

Figure 1 illustrates an example of a lane-based vector processor architecture and lane structure;

Figure 2 illustrates the dataflow of an 8-point decimation in time Cooley-Tukey FFT;

Figure 3 schematically illustrates the dataflow of an 8-point decimation in time Pease FFT;

Figure 4 schematically illustrates the decomposition of an 8-point FFT with a 4-step FFT decomposition;

Figure 5 schematically illustrates an overview of a hybrid FFT computation method in accordance with embodiments of the present invention;

Figure 6 illustrates the hybrid method based on the radix-2 Cooley-Tukey decomposition;

Figure 7 illustrates the hybrid method based on the radix-4 Cooley-Tukey decomposition;

Figure 8(a) schematically illustrates the dataflow of a shuffling operation in an 8-point Pease FFT;

Figure 8(b) schematically illustrates the dataflow of a shuffling operation in a 4-point Pease FFT;

Figure 9 schematically illustrates the dataflow of an optimized Pease FFT kernel;

Figure 10 schematically illustrates an overview of a hybrid FFT computation method in accordance with another embodiment of the present invention;

Figure 11 shows an exemplary architecture for a vector processor in accordance with embodiments of the present invention;

Figure 12 shows an exemplary vector lane architecture;

Figure 13 shows another exemplary vector lane architecture;

Figure 14 schematically illustrates an example of a method in accordance with embodiments of the present invention;

Figure 15 shows an example of a method for data shuffling in accordance with embodiments of the present invention;

Figure 16 schematically illustrates an apparatus for performing the methods described herein and some of its associated components.

DETAILED DESCRIPTION

Embodiments of the present invention relate to a hybrid FFT computation method suitable for SIMD/vector processors that can directly re-use SIMD/vector processor computation resources and data paths. Also described is a simplified shuffling mechanism that eliminates the need for additional dedicated computation resources and complex shuffling data paths. In parallel, such methods allows de-coupled scaling of the vector register size and computation resources, which can achieve much finer granularity of performance-resource scaling and better utilization of the computation resources.

In the context of fast Fourier transform algorithms, a butterfly is a portion of the computation that combines the results of smaller FFTs into a larger FFT, or vice versa. In the case of the radix-2 Cooley-Tukey algorithm, the butterfly is simply a FFT of size-2 that takes two inputs $(x_0, x_1)$ corresponding outputs of the two subtransforms and gives two outputs $(y_0, y_1)$ and the twiddle factor $W$ by the formula:

$$y_0 = x_0 + x_1 * W$$

$$y_1 = x_0 - x_1 * W$$

A twiddle factor in FFT algorithms is any of the trigonometric constant coefficients that are multiplied by the data in the course of the algorithm.

The SIMD/vector permutation/shuffling operation is an operation that rearranges the order of the elements in a vector. In the context of the SIMD/vector processor, a permutation/shuffling means changing the order of the data in the vector registers in a user predefined manner.

Two processors can be considered binary compatible if they can execute the same software binary image without recompilation of the application.

For an *N*-point FFT, the maximum number of elements that can fit in one vector register is VLMAX. $L=\log_2(N)$ is the total number of stages required for computing the whole FFT. $M = \log_2(VLMAX)$ is the total number of stages for computing the "short" FFT (i.e. an FFT that can fit entirely within the vector register file).

Embodiments of the present invention provide a method to compute long FFTs using a hybrid algorithm and short size FFTs using an optimized Pease FFT kernel, which can be equipped with application specific instructions (ASI) for the shuffling operation. The method can also be used to compute inverse FFTs (iFFTs).

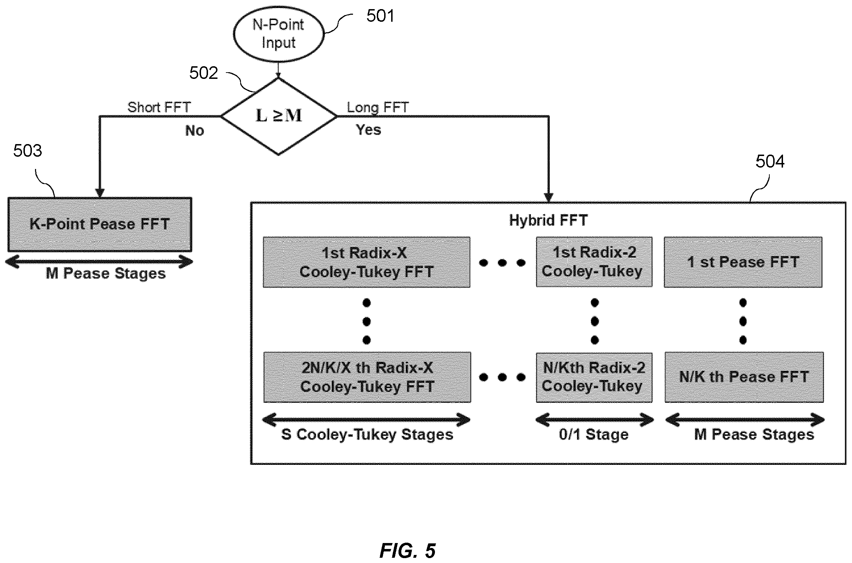

Figure 5 shows an overview of the hybrid FFT method. In this example, the Cooley-Tukey and Pease FFT algorithms are used to perform the Fourier transform operations of the first type and the Fourier transform operations of the second type respectively. However, other suitable FFT algorithms may alternatively be used in the hybrid method described herein.

There are N input points in the FFT to be processed, as shown at 501. The input points may be obtained from a signal received by a signal processing apparatus. The signal may comprise, for example, telecommunications or image data.

An N-point radix-2 Cooley-Tukey FFT is an algorithm that computes a DFT in $L = \log_2 N$ stages. Therefore, for a radix-2 Cooley-Tukey algorithm, the number of computation stages is $L = \log_2 N$.

The length of the vector registers is VLMAX (i.e. VLMAX is the maximum number of elements that can fit in a single vector register). $M = \log_2(VLMAX)$. At 502, is it determined whether $L \geq M$.

If no (i.e. if L<M), the FFT is a short FFT and can be processed using a K-point Pease FFT, where $K=VLMAX=2^M$, with M Pease stages at 503, where $M=\log_2(VLMAX)$. If L < M (i.e. $\log_2 M < \log_2 VLMAX$) then the number of input data points is less than VLMAX and the data points can therefore fit inside the vector registers and the FFT is short.

If yes (i.e. if $L \geq M$), the FFT is a long FFT. As shown at 504, the long FFT can be decomposed into smaller FFTs that can then be sequentially handled by the Pease FFT kernel. In the example shown in Figure 5, S Cooley-Tukey stages are performed to decompose the input into multiple short FTTs. Here, S is an integer greater than or equal to 1. If L-M is odd, an additional radix-2 Cooley-Tukey stage can be performed. The intermediate result of the Cooley-Tukey stages is multiple short FTTs. The multiple short FTTs are then used as input to the Pease stages. In the example shown in Figure 5, in the Pease stages, M short FTTs are computed in sequence to form an output representing the reconstructed N-point data.

Suppose the Pease FFT kernel can only handle N/4 points due to the limited length of the vector register (i.e. VLMAX = N/4), while there are N points in the long FFT to be processed. The long FFT is decomposed into smaller FFTs using the Cooley-Tukey algorithm in one or more initial stages that can be handled by the Pease FFT kernel in later stages. The hybrid approach therefore allows long FTTs to be processed as multiple short FTTs.

In this example, the inner loops/stages of the FFT computation is/are performed using the Pease FFT algorithm. The outer loops/stages of the FFT computation is/are performed using the Cooley-Tukey radix-N (N: power of two) FFT algorithms. However, other suitable algorithms may be used.

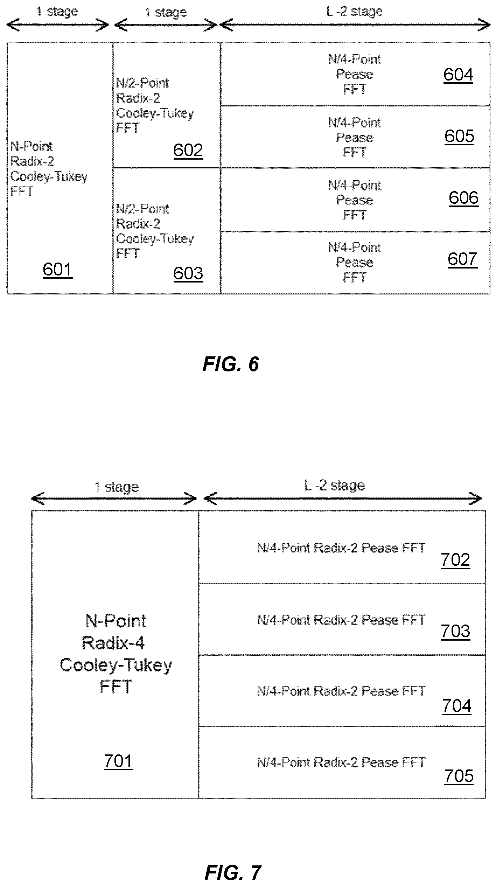

Figure 6 illustrates the hybrid method based on the radix-2 Cooley-Tukey decomposition. Figure 6 illustrates that an *N*-point radix-2 Cooley-Tukey FFT 601 can be calculated by two *N/2*-point FFT 602, 603 or four *N/2*-point FFT 604, 605, 606, 607 and so on. Therefore, the first 2 stages from the left can be computed with the radix-2 Cooley-Tukey FFT and the last *L-2* stages of the Cooley-Tukey FFT can be substituted into the *L-2* stages of the Pease FFT. In this example, all blocks in the last L-2 stages are N/4-Point radix-2 Pease FFT.

Similarly, the Pease FFT algorithm can also be used to compute the Cooley-Tukey FFT with higher radix, for example radix-4 or radix-8. An example of the radix-4 Cooley-Tukey FFT based hybrid method is shown in Figure 7. Figure 7 illustrates that an N-point radix-4 Cooley-Tukey FFT 701 can be calculated by four *N/4*-point radix-2 Pease FFT 702, 703, 704, 705. Therefore, the first stage(s) from the left can be computed with the radix-4 Cooley-Tukey FFT and the last *L-2* stages Cooley-Tukey FFT can be substituted into the *L-2* stages Pease FFT. In this example, all blocks in the last L-2 stages are N/4-Point radix-2 Pease FFT.

The computation pattern and hardware settings for the Pease FFT are kept the same as for the case of the radix-2 Cooley-Tukey decomposition of Figure 6. The combination of the Cooley-Tukey FFT stages of different radix with the Pease FFT leads to a SIMD/vector friendly overall FFT with a reduced data memory footprint and hardware implementation simplification.

Thus, for long FFTs, a long FFT can be decomposed into several short size FFTs which can be computed by the Cooley-Tukey FFT in the early stages and by the Pease FFT in the later stages. The Pease FFT in the later stages can be implemented using an optimised vector shuffling operation, as will now be described in more detail.

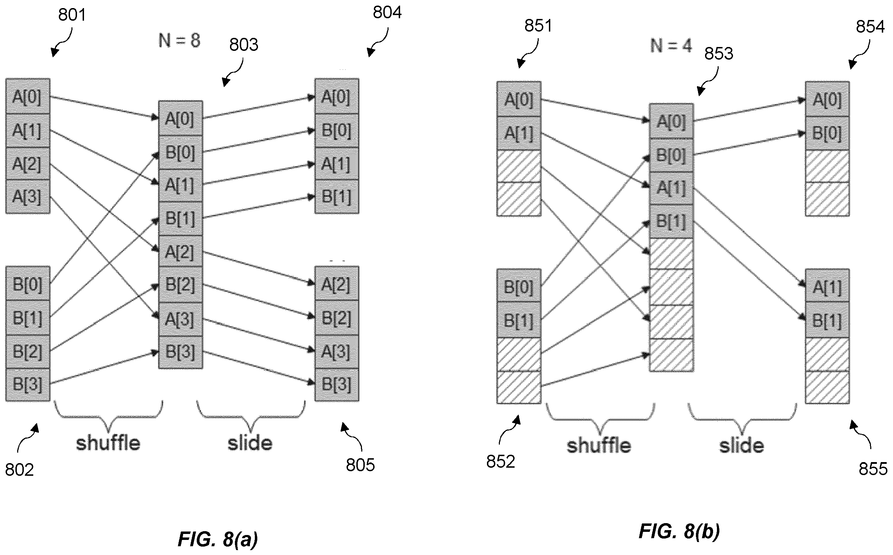

Figures 8(a) and 8(b) show an exemplary dataflow of the data-shuffling operation. The example shown in Figure 8(a) has 8 data points (8-point, N=8) and the example shown in Figure 8(b) has 4 data points (4-points, N=4). The *"shuffle"* stage data path is identical in both implementations, and the "power-of-two *slide"* stage data path, which is also a scalable implementation, is used to generate two operands for the arithmetic instructions in the algorithm. In these examples, VLMAX = 4.

In Figure 8(a), where the number of data points N=8, source register 801, stores bits A[0], A[1], A[2] and A[3]. Source register 802, stores bits B[0], B[1], B[2] and B[3]. In Figure 8(b), where N=4, source register 851 stores bits A[0] and A[1]. Source register 852 stores bits B[0] and B[1].

For an N-point FFT, the amount of data to be processed in each vector register before the shuffling is N/2. The process of implementing one shuffling operation in the Pease FFT can be divided into four steps.

In the first step, the length of the intermediate destination vector register (803, 853) after the *shuffle* instruction is set to be C. C is an integer greater than 1. C may be equal to or a multiple of N.

The *shuffle* instruction is then executed in a second step. The data in two source registers (801 and 802, and 851 and 852 in Figures 8(a) and 8(b) respectively) will be shuffled into the intermediate destination register (803, 853) through a fixed data path.

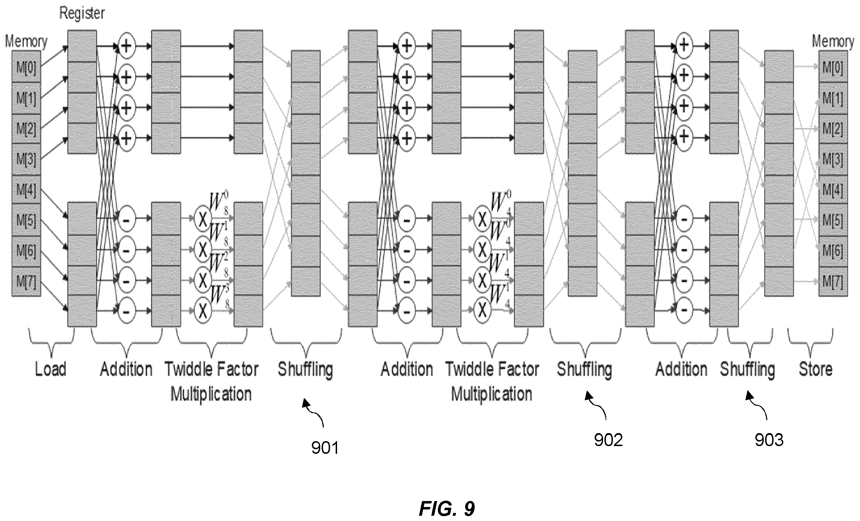

The data points in each of the source registers are shuffled into the intermediate register so that they are alternately interleaved (also known as a perfect shuffle or Faro shuffle), i.e. in Figure 9(a) they are shuffled from the source registers 801 and 802, where they are in the order A[0], A[1], A[2], A[3], and B[0], B[1], B[2], B[3] respectively, into the intermediate destination register 803 in the order A[0], B[0], A[1], B[1], A[2], B[2], A[3], B[3]. This can therefore be referred to as perfect shuffling.

In a third step, the length of the destination registers after the *slide* instruction (804 and 805, and 854 and 855 in Figures 8(a) and 8(b) respectively) is then set to be C/2.

The *slide* instruction is then executed in a fourth step. The N data points are transferred from the intermediate destination register to the final destination registers according to the value of N. N/2 data points from the intermediate destination register are slid into each final destination register (e.g. 804, 805 in Figure 9(a)). As a result, the data in the two destination registers 804, 805, 854, 855 are in the desired order for the Pease FFT. The data stores in these registers can then be used as subsequent operands.

The butterfly computation and the shuffling operation in the Pease FFT can thus be decoupled. Two instructions can be used for the shuffling operation. In one example, the first instruction is an application specific instruction (ASI) for shuffling data of two vector registers into the double-length intermediate destination register. A new dedicated fixed wired data path can be designed for this instruction. The second instruction slides the two halves of the data in the intermediate destination register to two final destination registers to generate two operands for the following vector arithmetic operations.

Note that step 1 and step 3 are supported by the hardware of standard scalable lane-based vector processors. Moreover, the *slide* instruction is also a commonly supported instruction in those processors. The shuffling can be performed using fixed wire between registers based on register grouping. Then the only additional hardware resources are fixed wiring for the *shuffle* instruction and can be tailored easily for various SIMD/vector processors with different SIMD/vector register length.

The shuffle instruction can therefore be achieved by fixed wiring and the slide instruction is already commonly implemented in scalable SIMD/vector processors. This may result in lower hardware overhead compared with methods using the Cooley-Tukey FFT algorithm for short size FFTs. As the length of the vector register increases, this design can minimize hardware resources.

It is also possible to design step 2 and step 4 into one instruction. In this case, the data path is not changed. This combination of a perfect shuffling and a simple per SIMD/vector processor parameterized sliding operation are therefore SIMD/vector micro-architecture implementation friendly. Therefore, in some implementations, the perfect shuffling and the power of two sliding operation may be combined into a single instruction, rather than being implemented as two separate instructions.

The underlying processor interface thus provides a simplified shuffling operation: perfect shuffling and power-of-two sliding operations to implement the inner loop of the Pease FFT or iFFT.

Exemplary pseudo code is shown below:

set the destination vector length: 1 cycle

shuffle v2, v0, v1: 1 cycle

set the destination vector length: 1 cycle

slide: $\#element/\#lane$ cycle

Total:

$$3 + \frac{\#element\ per\ wing}{\#lane}\ cycles$$

Another type of decomposition algorithm is the six/four-step FFT (see, for example https://en.wikipedia.org/wiki/Bailey%27s_FFT_algorithm), which decomposes $N$ points into $N_1$ and $N_2$ where N = $N_1 * N_2$. Then the N-point FFT can be calculated by computing $N_1$ independent $N_2$-point FFT followed by computing $N_2$ independent $N_1$-point FFT. Assuming $N_1$ and $N_2$ are small enough for the short FFT kernel (i.e. $N_1$ and $N_2$ are less than or equal to the length of the registers), the $N_2$-point FFT and $N_1$-point FFT can be computed by the Pease FFT with the data-shuffling operation, as described above.

An exemplary dataflow for an implementation where the optimized Pease FFT kernel implements the data-shuffling operation is shown in Figure 9. Three data-shuffling operations are shown at 901, 902 and 903. The shuffling operation is identical in each of the Pease stages. In this example, the FFT has 8 data points. Firstly, the addition, twiddle factor multiplication and the shuffling operation are decoupled for better hardware scalability and reusability. Moreover, the shuffling operation is implemented by two separate operations: *shuffle* and an optimized power-of-two *slide* operation, as described above.

In some embodiments, indexed store(s) is(are) used to store intermediate FFT/iFFT values. In other embodiments, an indexed save operation is used to save intermediate FFT/iFFT values to a special purpose register that holds the entire length of the FFT/iFFT data points.

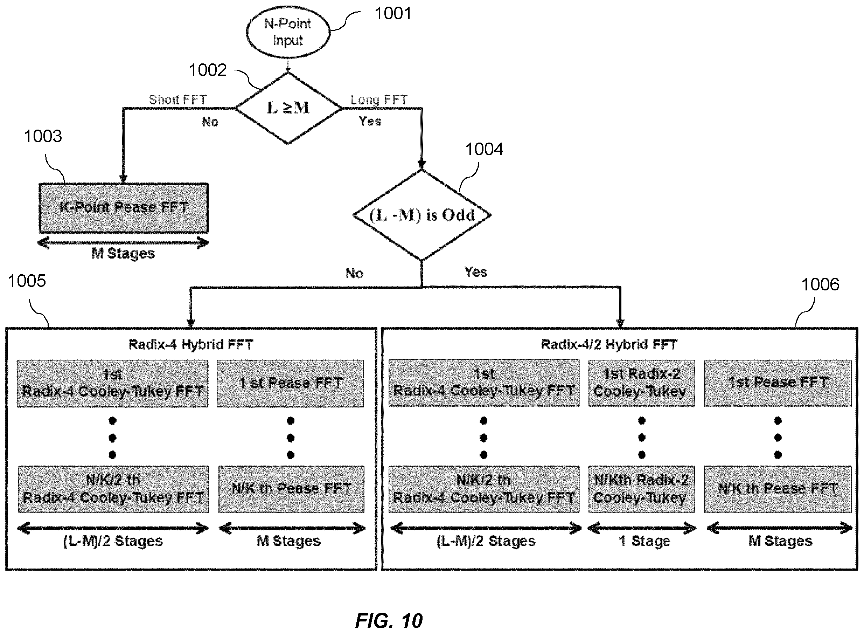

Figure 10 shows an overview of another exemplary embodiment of the hybrid FFT approach. In this example, again the Cooley-Tukey and Pease FFT algorithms are used. However, other suitable FFT algorithms may alternatively be used in the hybrid method described herein.

There are N points in the FFT to be processed, as shown at 1001. At 1002, it is determined whether $L \geq M$.

As for the example of Figure 5, if $L \leq M$, the FTT is short and can be processed using a K-point Pease FTT in M stages (where for radix-2, $L = \log_2 N$, K=VLMAX=$2^M$ and M= $\log_2$VLMAX), as shown at 1003.

If yes (i.e. $L \geq M$), the FFT is a long FFT. The long FFT can be decomposed into smaller FFTs that can be handled by the Pease FFT kernel.

At 1004, it is determined whether L-M is odd.

If L-M is not odd, as shown at 1005, a radix-4 hybrid FFT is used with (L-M)/2 radix-4 Cooley-Tukey stages and M Pease stages.

If L-M is odd, as shown at 1006, a radix 4 hybrid FFT is used with (L-M)/2 radix-4 Cooley-Tukey stages, 1 radix-2 Cooley-Tukey stage and M Pease stages.

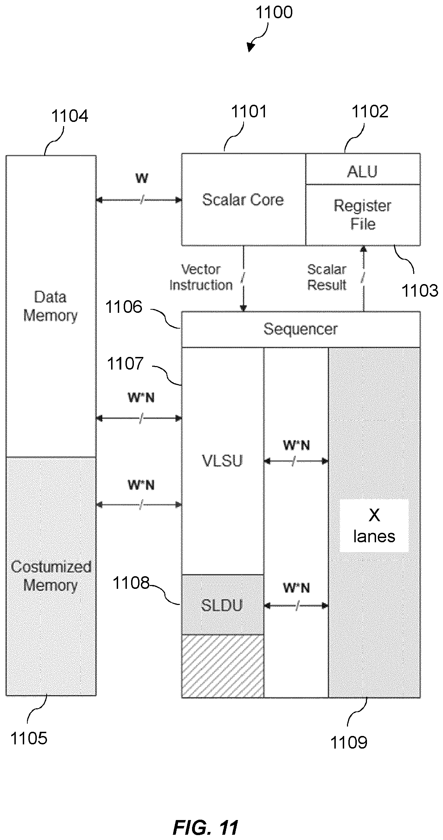

Figure 11 shows an exemplary architecture for a vector processor 1100. The front end is a scalar processor responsible for fetching and decoding all instructions. The scalar processor comprises a scalar core 1101, an ALU 1102 and a register file 1103. If there is a vector instruction, the scalar core 1101 will dispatch it to the vector core and perform corresponding actions. The scalar core and the vector core are both in communication with memory 1104. There is also a separate dedicated data memory 1105 and data bus for twiddle factors (W).

The sequencer 1106 of the vector core comprises a control unit. The VLSU 1107 is configured to access the memories 1104, 1105. The VLSU 1107 loads/-stores multiple data between memory and vector registers in parallel. An area-optimized SDU is shown at 1108. The hatched area illustrates that compared to a traditional vector processor, as shown in Figure 1, vector processors implementing embodiments of the present invention can use a simpler shuffling unit that consumers a smaller area, and hence there is an area saving on Silicon.

The vector core comprises multiple lanes. In this example, the vector core has X lanes, show at 1109. The number of lanes is scalable, for example, X = 1, 2, 4, 8, ... The lanes can store multiple data in one vector register and process them in parallel.

The twiddle factor, W, can be either pre-computed and stored in memory, or on-the-fly computed.

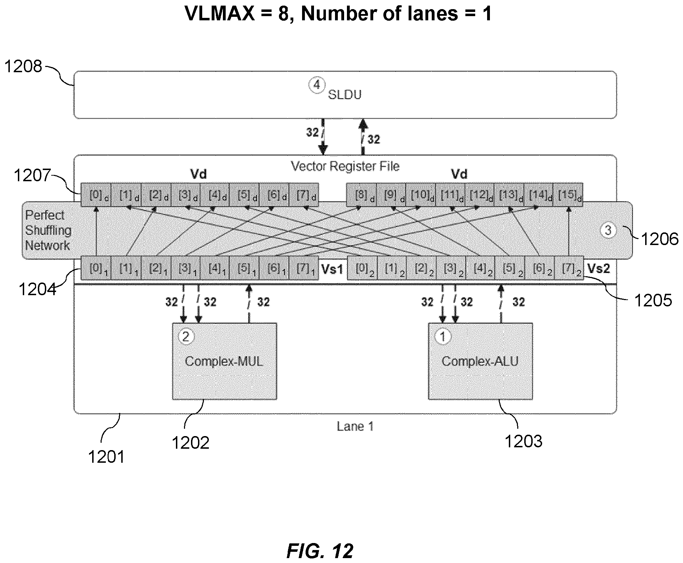

Figure 12 shows an exemplary vector lane architecture. In this example, VLMAX =8 and the number of lanes in the vector core is 1. The lane 1201 comprises a MUL 1202 and an ALU 1203. As described above, the shuffling operation of the Pease FFT is divided into two steps on the fixed wired Perfect Shuffling Network 1206 between source registers 1204 and 1205 and intermediate destination register 1207 and an area optimized SLDU 1208 for the sliding operation. The bits stored in the two source registers 1 (1204) and 2 (1205) are denoted by $[n]_1$ and $[n]_2$ respectively, where n=0, 1, ..., 7. The intermediate destination register 1207 is twice the size of each of the source registers 1204, 1205. The bits stored in the source registers 1204, 1205 undergo perfect shuffling into the intermediate destination register 1207. The bits then undergo a power-of-two sliding operation in the SLDU 1208. The resulting data in the destination registers of the SLDU is used as operands for subsequent Fourier operations.

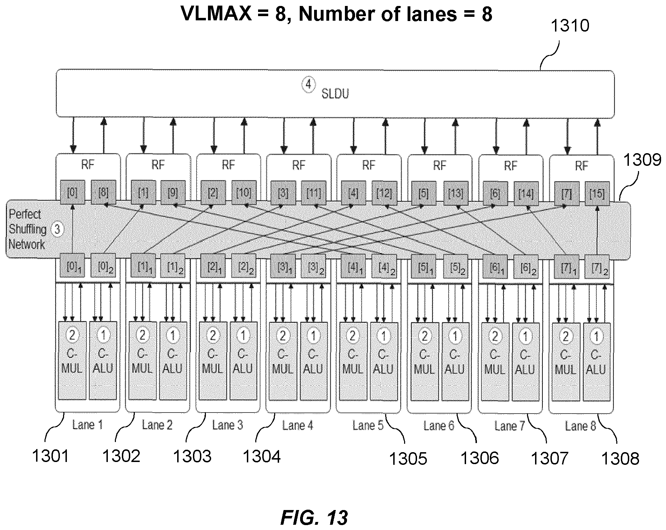

Figure 13 shows another exemplary vector lane architecture where VLMAX = 8 and the number of lanes in the vector core is 8. The 8 lanes are shown at 1301-1308. Each lane comprises a MUL and an ALU. The perfect shuffling network is shown at 1309 and the SLDU is shown at 1310. The bits stored in the two source registers 1 and 2 are denoted by $[n]_1$ and $[n]_2$ respectively, where n=0, 1, ..., 7. The bits stored in the source registers undergo perfect shuffling into the intermediate destination register. They then undergo a power-of-two sliding operation in the SLDU 1310. The resulting data in the destination registers of the SLDU is used as operands for subsequent Fourier operations.

The number of bits in one register may not be fixed. In embodiments of the present invention, the bit width is agnostic, meaning it can be extended to the desired bit width. The number of vector registers may also be architecture-defined, and is therefore also agnostic in this approach.

The length of the vector register and the number of execution units are advantageously decoupled and the dedicated data path in the BPU is eliminated. The new data path is reusable by other arithmetic operations. As mentioned above, this architecture is compatible with any power of 2 length of vector register (for example, 128-bit, 256-bit, ..., 64K-bit) and any power of 2 number of lanes (for example, 1,2,4,8,...). There is no dedicated data path in the ALU and MUL.

Generally, the method described herein comprises forming an intermediate by cyclically performing one or more Fourier transform stages using Fourier transform operations of a first type, for example using a Cooley-Tukey radix n fast Fourier transform algorithm, where n is a power of 2. The first stage of the one or more stages takes the input data, comprising N data points, as initial input. An output is formed by performing one or more Fourier transform stages using one or more Fourier transform operations of a second type, for example using a Pease fast Fourier transform algorithm, taking the intermediate as input, where the intermediate comprises multiple smaller FFTs.

The Fourier transform operations of the first type, for example the Cooley-Tukey FFT, can be used for long FFT decomposition and the Fourier transform operations of the second type, for example the Pease FFT, for short FFT computation following the decomposition of the long FFT.

In the Cooley-Tukey stage(s), all memory access of the data may be in-place (i.e. the load and store address may be the same). No shuffling operation is needed in the Cooley-Tukey stages. There may be an additional step to deal with the odd stage in the Cooley-Tukey part, as illustrated in Figure 10.

In the Pease FFT stage(s), a unique shuffling operation pattern, which can be supported by dedicated hardware, can be used in each stage. The shuffling operation is identical for each of the Pease stages.

The method described herein uses several generalized instructions to compute one stage in the FFT. Those instructions can be reused by other algorithms. For decomposition, the present approach supports mixed radix (for example, 8/4/2) Cooley-Tukey FFT decomposition.

The FFT/iFFT computation instruction flow can use a perfect shuffling operation and power-of-two sliding operation at the inner most loop of the FFT/iFFT computation phases, and only an indexed vector store operation for the inner most loop. The outer loops are enabled for arbitrarily sized FFT/iFFTs can comprise regular continuous vector stores and no additional shuffling operations.

The FFT/iFFT computation can fully re-use the maximum possible data point size, which is solely determined by the number of data points that can be held in a SIMD/vector register, and does not directly rely on the number of parallel processing units present.

In a further example, the vector register has a length $M = 2^m$, the length of the FFT is $N = 2^l$ points and the radix of the Cooley-Tukey FFT to be used is $R = 2^r$. The FFT is split into $(r + 1)$ parts. For the first r parts, the Fourier operations of a first type are cyclically performed. These stages may use mixed radix Cooley-Tukey FFT algorithms. (i.e. the Cooley-Tukey FFT used for each stage has a different radix to one or more other stages). Vector shuffling is not needed for these stages. In this example, the load and store address of the FFT data points is identical within one stage of the first r stages. For the last part, N/M radix-2 Pease FFTs are performed with a dedicated perfect shuffling operation which is identical for all $m$ stages.

The FFT computation is thus done in multiple steps, with each step implementing only a subset of the operations in the previous paragraph, such that maximum efficiency of the underlying hardware micro-architecture may be achieved.

The long-FFT shortening can be performed based on vector scatter/gather load instructions to divide long FFTs into shorter FFTs that can fit into the vector core registers with length M. As described above, the decomposition algorithm could be a Cooley-Tukey radix 2/4/8/... FFT algorithm or other algorithms that can divide long FFTs into shorter FFTs.

The short-FFTs can be computed using a simplified shuffle unit (fixed data path for the shuffle operation, followed by a power-of-two sliding operation) employing the Pease FFT algorithm. These stages can use vector processor lanes to support basic complex number multiplication and addition/subtraction. No specialized and complex instructions are needed.

Long-FFT re-construction can be based on vector scatter/gather store instructions to re-construct the result of the long FFT, using either a pre-computed bit-reversal-index stored in memory, or an on-the-fly computed bit-reversal index.

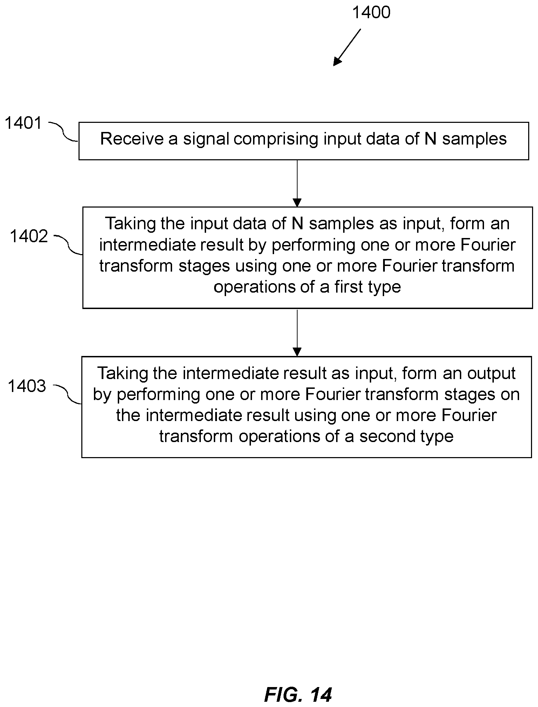

Figure 14 shows an example of a computer-implemented method of performing a Fourier transform operation on input data of N samples. At step 1401, the method comprises receiving a signal comprising input data of N samples. Next, the method comprises performing a Fourier transform operation on the input data of N samples by performing steps 1402 and 1403. At step 1402, the method comprises forming an intermediate result by performing one or more Fourier transform stages using Fourier transform operations of a first type and taking the input data as initial input. At step 1403, the method comprises, taking the intermediate result as input, forming an output by performing one or more Fourier transform stages using one or more Fourier transform operations of a second type. Optionally, the method further comprises storing the output, for example at a memory of the apparatus. Optionally, the method further comprises transmitting or transferring or saving the output to another device, for example a digital communications device and/or an image processing device.

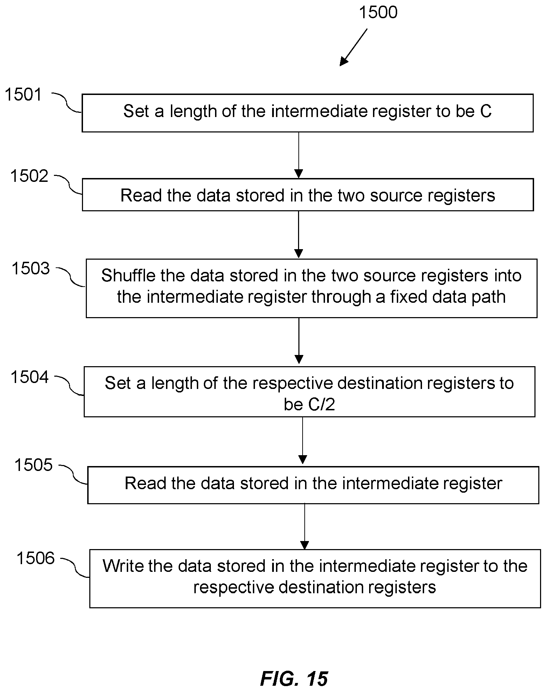

Figure 15 shows an example of a method for data-shuffling that may be performed alone or in conjunction with the method above, for example as part of the Fourier transform operations of the second type. The data-shuffling operation may be implemented by two instructions. In this case, a first instruction of the two instructions is operable to shuffle data stored in two source registers into an intermediate register. The intermediate register has twice the length of each of the source registers (i.e. the intermediate register is double the length of each source register). A second instruction of the two instructions is operable to slide each half of the data stored in the intermediate register to a respective destination register to generate two operands for subsequent arithmetic operations. Alternatively, these operations may be executed by a single instruction.

The method for performing the data-shuffling operation comprises, at step 1501, setting a length of the intermediate register to be C. C is an integer greater than 1. At step 1502, the method comprises reading the data stored in the two source registers. At step 1503, the method comprises shuffling the data stored in the two source registers into the intermediate register through a fixed data path. At step 1504, the method comprises setting a length of the respective destination registers to be C/2. At step 1505, the method comprises reading the data stored in the intermediate register. At step 1506, the method comprises writing the data stored in the intermediate register to the respective destination registers.

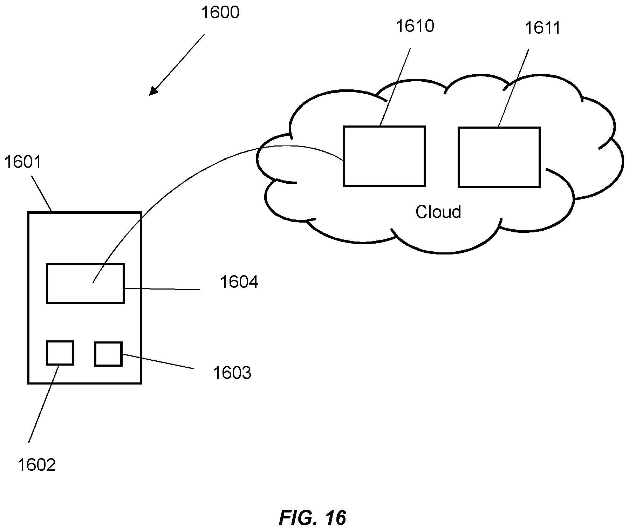

Figure 16 shows an example of a data processing apparatus 1600 configured to implement the method described herein. The apparatus comprises a device 1601. The device 1601 comprises a processor 1602 and a memory 1603. The memory 1603 may be the location of the indexed storage areas or indexed memory where the intermediate FFT results are stored in some implementations.

The device 1601 may also comprise a transceiver 1604 being capable of communicating over a network with other entities 1610, 1611. Those entities 1610, 1611 may be logical entities and/or physically remote from the device 1601. The network may be a publicly accessible network such as the internet. The entities 1610, 1611 may be based in the cloud. Entity 1610 may comprise a computing entity. Entity 1611 may comprise a command and control entity. These entities 1610, 1611 are logical entities. In practice they may each be provided by one or more physical devices such as servers and data stores, and the functions of two or more of the entities 1610, 1611 may be provided by a single physical device. Each physical device implementing an entity comprises a processor and a memory. The devices may also comprise a transceiver for transmitting and receiving data to and from the transceiver 1604 of device 1601. The memory stores in a non-transient way code that is executable by the processor to implement the respective entity in the manner described herein.

Therefore, the method may be deployed in multiple ways, for example in the cloud (application and infrastructure resources that exist on the internet), on the device, or alternatively in dedicated hardware. As indicated above, the cloud facility could perform training to develop new algorithms or refine existing ones. Depending on the compute capability near to the data corpus, the training could either be undertaken close to the source data, or could be undertaken in the cloud, e.g. using an inference engine. The method may also be implemented at the device, in a dedicated piece of hardware, or in the cloud.

The hybrid computation method described herein combines the characteristics of Cooley-Tukey radix-n and Peace algorithms, or other suitable algorithms. As mentioned above, the method can be used to compute FFTs, as well as inverse FFTs (iFFTs).

The hybrid method maps very well on the SIMD/vector processor for achieving high resource utilization rate and simplified data path design of the underlying micro-architecture. The per-area computation efficiency is increased significantly, as this method does not require any dedicated computation resources, nor any complex data path, by re-using existing computation data path of a SIMD/vector processor, and uses only a simplified data path for shuffling operations. This can be more computationally efficient than traditional full-permutation data paths.

The shuffling operation and the butterfly operation in the Pease FFT are decoupled. This can result in better hardware scalability than FFT coprocessor. The number of execution units and the length of the vector registers can be changed freely without affecting the data path of the shuffling and the execution units.

This can also allow for better reusability for other algorithms. The ASI and data path for the shuffling operation have the potential to be used by other communication algorithms, such as algorithms for bitonic sorting.

This can also allow for hardware scalability (for example, in terms of VLEN, Number of lanes and/or Number of XUs), software compatibility and low hardware overhead.

This approach can be implemented in any system using FFT and/or iFFT operation where flexibility (for example, in programmability), scalability (such as supporting different product using a unified architecture) or reusability (for example, shared computation unit and ASIs) are desired.

The FFT/iFFT computation method is universal and is not bounded to particular devices. Exemplary application areas include signal processing, including wireless communication, high speed communication and sensing, and image processing.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

**Claims**

1. A processor (1602) for processing a signal using a fast Fourier transform, the processor (1602) being configured to:

    receive (1401) a signal comprising input data of N samples; and
perform a Fourier transform operation on the input data of N samples by:

taking the input data of N samples as initial input, forming (1402) an intermediate result by performing one or more Fourier transform stages using one or more Fourier transform operations of a first type; and
taking the intermediate result as input, forming (1403) an output by performing one or more Fourier transform stages on the intermediate result using one or more Fourier transform operations of a second type.

2. The processor (1602) as claimed in claim 1, wherein the processor (1602) is configured to:

implement the Fourier transform operations of the first type by executing a series of instructions that include, for each Fourier transform operation, a plurality of processing operations without data reordering therebetween; and
implement the Fourier transform operations of the second type by executing a series of instructions that include, for each Fourier transform operation, a plurality of processing operations with data reordering therebetween.

3. The processor (1602) as claimed in any preceding claim, wherein the processor (1602) is configured to decompose the input data of N samples into multiple smaller parts by performing the Fourier transform operations of the first type.

4. The processor (1602) as claimed in any of claims 1 to 3, wherein the processor (1602) is configured to implement the Fourier transform operations of the first type using a Cooley-Tukey radix n fast Fourier transform algorithm, where n is a power of 2.

5. The processor (1602) as claimed in any of claims 1 to 3, wherein the processor (1602) is configured to implement the Fourier transform operations of the first type using a four-step or a six-step fast Fourier transform algorithm.

6. The processor (1602) as claimed in any preceding claim, wherein the processor (1602) is configured to implement the Fourier transform operations of the second type using a Pease fast Fourier transform algorithm.

7. The processor (1602) as claimed in any preceding claim, wherein the processor (1602) is a vector processor having at least some vector registers of length VLMAX and the processor (1602) is configured to perform the Fourier transform operation by executing instructions, at least some of which take vectors of length VLMAX as operands.

8. The processor (1602) as claimed in any of claims 3 to 7 as dependent on claim 2, wherein the Fourier transform operations of the second type comprise a data-shuffling operation.

9. The processor (1602) as claimed in claim 8, wherein the processor (1602) is configured to perform the data-shuffling operation by executing two instructions, wherein a first instruction of the two instructions is operable to shuffle data stored in two source registers into an intermediate register, the intermediate register having twice the length of each of the source registers.

10. The processor (1602) as claimed in claim 9, wherein a second instruction of the two instructions is operable to slide each half of data stored in the intermediate register to a respective destination register to generate two operands for subsequent arithmetic operations.

11. The processor (1602) as claimed in any of claims 8 to 10, wherein the processor (1602) is configured to implement the data-shuffling operation by:

setting (1501) a length of the intermediate register to be C;
reading (1502) the data stored in the two source registers; and
shuffling (1503) the data stored in the two source registers into the intermediate register through a fixed data path;
setting (1504) a length of the respective destination registers to be C/2; and
reading (1505) the data stored in the intermediate register; and
writing (1506) the data stored in the intermediate register to the respective destination registers.

12. The processor (1602) as claimed in any preceding claim, wherein the one or more processors (1602) are configured to store the intermediate result in one or more indexed data storage areas or an indexed memory and/or to store the intermediate result in a special purpose or dedicated register by implementing an indexed save operation, wherein the special purpose or dedicated register is of length N.

13. An apparatus (1600) comprising the processor (1602) as claimed in any of claims 1 to 12.

14. A method (1400) for processing a signal using a fast Fourier transform, the method comprising:

receiving (1401) a signal comprising input data of N samples; and

performing a Fourier transform operation on the input data of N samples by:

taking the input data of N samples as initial input, forming (1402) an intermediate result by performing one or more Fourier transform stages using one or more Fourier transform operations of a first type; and taking the intermediate result as input, forming (1403) an output by performing one or more Fourier transform stages on the intermediate result using one or more Fourier transform operations of a second type.

**15.** A computer program which, when executed by a computing device (1601), causes the computing device to perform the method (1400) of claim 14.

**Amended claims in accordance with Rule 137(2) EPC.**

**1.** A processor (1602) for processing a signal using a fast Fourier transform, the processor (1602) being configured to:

receive (1401) a signal comprising input data of N samples; and perform a Fourier transform operation on the input data of N samples by: taking the input data of N samples as initial input, forming (1402) an intermediate result by performing one or more Fourier transform stages using one or more Fourier transform operations of a first type; and taking the intermediate result as input, forming (1403) an output by performing one or more Fourier transform stages on the intermediate result using one or more Fourier transform operations of a second type, wherein the processor (1602) is configured to:

implement the Fourier transform operations of the first type by executing a series of instructions that include, for each Fourier transform operation, a plurality of processing operations without data reordering therebetween; and implement the Fourier transform operations of the second type by executing a series of instructions that include, for each Fourier transform operation, a plurality of processing operations with data reordering therebetween.

**2.** The processor (1602) as claimed in claim 1, wherein the processor (1602) is configured to decompose the input data of N samples into multiple smaller parts by performing the Fourier transform operations of the first type.

**3.** The processor (1602) as claimed in any of claims 1 to 2, wherein the processor (1602) is configured to implement the Fourier transform operations of the first type using a Cooley-Tukey radix n fast Fourier transform algorithm, where n is a power of 2.

**4.** The processor (1602) as claimed in any of claims 1 to 2, wherein the processor (1602) is configured to implement the Fourier transform operations of the first type using a four-step or a six-step fast Fourier transform algorithm.

**5.** The processor (1602) as claimed in any preceding claim, wherein the processor (1602) is configured to implement the Fourier transform operations of the second type using a Pease fast Fourier transform algorithm.

**6.** The processor (1602) as claimed in any preceding claim, wherein the processor (1602) is a vector processor having at least some vector registers of length VLMAX and the processor (1602) is configured to perform the Fourier transform operation by executing instructions, at least some of which take vectors of length VLMAX as operands.

**7.** The processor (1602) as claimed in any of claims 2 to 6, wherein the Fourier transform operations of the second type comprise a data-shuffling operation.

**8.** The processor (1602) as claimed in claim 7, wherein the processor (1602) is configured to perform the data-shuffling operation by executing two instructions, wherein a first instruction of the two instructions is operable to shuffle data stored in two source registers into an intermediate register, the intermediate register having twice the length of each of the source registers.

**9.** The processor (1602) as claimed in claim 8, wherein a second instruction of the two instructions is operable to slide each half of data stored in the intermediate register to a respective destination register to generate two operands for subsequent arithmetic operations.

**10.** The processor (1602) as claimed in any of claims 7 to 9, wherein the processor (1602) is configured to implement the data-shuffling operation by:

setting (1501) a length of the intermediate register to be C; reading (1502) the data stored in the two source registers; and shuffling (1503) the data stored in the two source registers into the intermediate register through a fixed data path;

setting (1504) a length of the respective destination registers to be C/2; and

reading (1505) the data stored in the intermediate register; and

writing (1506) the data stored in the intermediate register to the respective destination registers.

11. The processor (1602) as claimed in any preceding claim, wherein the one or more processors (1602) are configured to store the intermediate result in one or more indexed data storage areas or an indexed memory and/or to store the intermediate result in a special purpose or dedicated register by implementing an indexed save operation, wherein the special purpose or dedicated register is of length N.

12. An apparatus (1600) comprising the processor (1602) as claimed in any of claims 1 to 11.

13. A method (1400) for processing a signal using a fast Fourier transform, the method comprising:

receiving (1401) a signal comprising input data of N samples; and

performing a Fourier transform operation on the input data of N samples by:

taking the input data of N samples as initial input, forming (1402) an intermediate result by performing one or more Fourier transform stages using one or more Fourier transform operations of a first type; and taking the intermediate result as input, forming (1403) an output by performing one or more Fourier transform stages on the intermediate result using one or more Fourier transform operations of a second type,

wherein the method further comprises:

implementing the Fourier transform operations of the first type by executing a series of instructions that include, for each Fourier transform operation, a plurality of processing operations without data reordering therebetween; and

implementing the Fourier transform operations of the second type by executing a series of instructions that include, for each Fourier transform operation, a plurality of processing operations with data reordering therebetween.

14. A computer program which, when executed by a computing device (1601), causes the computing device to perform the method (1400) of claim 13.

**FIG. 1**

*FIG. 2*

*FIG. 3*

EP 4 586 080 A1

**FIG. 4**

EP 4 586 080 A1

*FIG. 5*

| 1 stage | 1 stage | L -2 stage | |
|---|---|---|---|
| N-Point Radix-2 Cooley-Tukey FFT  601 | N/2-Point Radix-2 Cooley-Tukey FFT  602 | N/4-Point Pease FFT | 604 |
| | | N/4-Point Pease FFT | 605 |
| | N/2-Point Radix-2 Cooley-Tukey FFT  603 | N/4-Point Pease FFT | 606 |
| | | N/4-Point Pease FFT | 607 |

**FIG. 6**

| 1 stage | L -2 stage | |
|---|---|---|
| N-Point Radix-4 Cooley-Tukey FFT  701 | N/4-Point Radix-2 Pease FFT | 702 |
| | N/4-Point Radix-2 Pease FFT | 703 |
| | N/4-Point Radix-2 Pease FFT | 704 |
| | N/4-Point Radix-2 Pease FFT | 705 |

**FIG. 7**

FIG. 8(b)

FIG. 8(a)

**FIG. 9**

EP 4 586 080 A1

*FIG. 10*

EP 4 586 080 A1

*FIG. 11*

**VLMAX = 8, Number of lanes = 1**

FIG. 12

## VLMAX = 8, Number of lanes = 8

FIG. 13

1400

1401 — Receive a signal comprising input data of N samples

1402 — Taking the input data of N samples as input, form an intermediate result by performing one or more Fourier transform stages using one or more Fourier transform operations of a first type

1403 — Taking the intermediate result as input, form an output by performing one or more Fourier transform stages on the intermediate result using one or more Fourier transform operations of a second type

*FIG. 14*

1500

1501 — Set a length of the intermediate register to be C

1502 — Read the data stored in the two source registers

1503 — Shuffle the data stored in the two source registers into the intermediate register through a fixed data path

1504 — Set a length of the respective destination registers to be C/2

1505 — Read the data stored in the intermediate register

1506 — Write the data stored in the intermediate register to the respective destination registers

*FIG. 15*

FIG. 16

## EUROPEAN SEARCH REPORT

**Application Number**

EP 24 15 1798

Europäisches
Patentamt
European
Patent Office
Office européen
des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAI D L ET AL: "EXTENT: a portable programming environment for designing and implementing high-performance block recursive algorithms", SUPERCOMPUTING '94., PROCEEDINGS WASHINGTON, DC, USA 14-18 NOV. 1994, LOS ALAMITOS, CA, USA,IEEE COMPUT. SOC, 10662 LOS VAQUEROS CIRCLE PO BOX 3014 LOS ALAMITOS, CA 90720-1264 USA, 14 November 1994 (1994-11-14), pages 49-58, XP010100457, ISSN: 1063-9535 ISBN: 978-0-8186-6605-6 * page 53, left-hand column, line 6 - line 14 * * page 55, left-hand column, line 39 - line 42 * | 1-15 | INV. G06F9/30 G06F9/38 |
| X | US 2015/199299 A1 (RHEE SAMUEL SANGMIN [US] ET AL) 16 July 2015 (2015-07-16) * paragraphs [0028], [0030], [0032], [0033], [0045] * | 1,13-15 | |
| A | EP 3 370 161 A1 (NXP BV [NL]) 5 September 2018 (2018-09-05) * the whole document * | 1-15 | TECHNICAL FIELDS SEARCHED (IPC) G06F |
| A | US 4 768 159 A (GRAY JOSEPH H [US] ET AL) 30 August 1988 (1988-08-30) * the whole document * | 1-15 | |

The present search report has been drawn up for all claims

| Place of search | Date of completion of the search | Examiner |
|---|---|---|
| The Hague | 25 July 2024 | Gratia, Romain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 1798

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2024

| Patent document cited in search report | Publication date | Patent family member(s) | | Publication date |
|---|---|---|---|---|
| US 2015199299 A1 | 16-07-2015 | US | 2015199299 A1 | 16-07-2015 |
| | | WO | 2015109122 A2 | 23-07-2015 |
| EP 3370161 A1 | 05-09-2018 | EP | 3370161 A1 | 05-09-2018 |
| | | US | 2018253399 A1 | 06-09-2018 |
| US 4768159 A | 30-08-1988 | NONE | | |

EPO FORM P0459

For more details about this annex : see Official Journal of the European Patent Office, No. 12/82